(19) Europäisches Patentamt
European Patent Office
Office européen des brevets

(11) EP 2 767 606 B1

(12) **EUROPEAN PATENT SPECIFICATION**

(45) Date of publication and mention
of the grant of the patent:
**12.09.2018 Bulletin 2018/37**

(21) Application number: **12846397.3**

(22) Date of filing: **01.11.2012**

(51) Int Cl.:
*C22C 38/00* (2006.01)     *C21D 9/46* (2006.01)
*C22C 38/14* (2006.01)     *C22C 38/60* (2006.01)
*C23C 2/06* (2006.01)      *C21D 8/02* (2006.01)
*C22C 38/04* (2006.01)

(86) International application number:
**PCT/JP2012/007021**

(87) International publication number:
**WO 2013/065313 (10.05.2013 Gazette 2013/19)**

(54) **HIGH-STRENGTH HOT-ROLLED STEEL SHEET AND PROCESS FOR PRODUCING SAME**

HOCHFESTES HEISSGEWALZTES STAHLBLECH UND HERSTELLUNGSVERFAHREN DAFÜR

FEUILLE D'ACIER LAMINÉE À CHAUD À HAUTE RÉSISTANCE ET SON PROCÉDÉ DE FABRICATION.

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.11.2011 JP 2011242299**

(43) Date of publication of application:
**20.08.2014 Bulletin 2014/34**

(73) Proprietor: **JFE Steel Corporation
Tokyo, 100-0011 (JP)**

(72) Inventors:
• **FUNAKAWA, Yoshimasa**
**Tokyo 100-0011 (JP)**
• **ARIGA, Tamako**
**Tokyo 100-0011 (JP)**
• **YAMAMOTO, Tetsuo**
**Tokyo 100-0011 (JP)**
• **UCHOMAE, Hiroshi**
**Tokyo 100-0011 (JP)**
• **OWADA, Hiroshi**
**Tokyo 100-0011 (JP)**

(74) Representative: **Hoffmann Eitle
Patent- und Rechtsanwälte PartmbB
Arabellastraße 30
81925 München (DE)**

(56) References cited:
EP-A1- 2 177 640     EP-A1- 2 735 623
EP-A1- 2 823 905     JP-A- 2002 322 539
JP-A- 2004 137 607   JP-A- 2004 137 607
JP-A- 2005 054 255   JP-A- 2007 063 668
JP-A- 2007 247 049   JP-A- 2010 053 434

• SARKAR B ET AL: "Development of Precipitation
Strengthened Steel with Adequate Stretch
Flangeability", JOURNAL OF MATERIALS
ENGINEERING AND PERFORMANCE,
SPRINGER US, BOSTON, vol. 20, no. 8, 21
October 2010 (2010-10-21), pages 1414-1418,
XP019964512, ISSN: 1544-1024, DOI:
10.1007/S11665-010-9777-Z

**Description**

[Technical Field]

The present invention relates to a high strength hot rolled steel sheet, which is suitable for parts of automobiles and other transportation machines and structural steels, e.g., construction steels, and which has high strength of tensile strength (TS): 780 MPa or more and excellent formability in combination, and a method for manufacturing the same.

[Background Art]

In the automobile industry, it is always an important issue to reduce the weight of an automotive body while maintaining the strength thereof and enhance the automotive fuel economy in order to reduce the amount of $CO_2$ output from the viewpoint of global environmental conservation. It is effective to decrease the thickness of a steel sheet by enhancing the strength of the steel sheet serving as a raw material for automotive parts for the purpose of weight reduction of automotive body while maintaining the strength of the automotive body. On the other hand, most of automotive parts using the steel sheet as a raw material are formed by press forming, burring, or the like and, therefore, the steel sheet for automotive parts is required to have excellent ductility and stretch flange formability. Consequently, the strength of, for example, tensile strength: 780 MPa or more and, in addition, the formability are regarded as important for the steel sheet for automotive parts, so that a high strength steel sheet with excellent formability, e.g., stretch flange formability, is desired.

Then, many researches and developments on high strength steel sheets having the strength and the formability in combination have been made until now. However, in general, the formability of the iron and steel material is degraded along with enhancement in strength, so that it is not easy to give the formability, e.g., stretch flange formability, to the high strength steel sheet without impairing the strength. For example, a technology is known, wherein a steel sheet microstructure is specified to be a complex microstructure in which a hard low temperature transformed phase, e.g., martensite, is dispersed in mild ferrite, so as to prepare a high strength steel sheet with excellent ductility. Such a technology is aimed at ensuring the compatibility between high strength and high ductility by optimizing the amount of martensite dispersed in ferrite. However, there is a problem that when the steel sheet having the above-described complex microstructure is subjected to expansion of a punched portion, so-called stretch flange forming, cracking occurs from the interface between soft ferrite and a hard low temperature transformed phase, e.g., martensite, to cause fracture easily. That is, sufficient stretch flange formability is not obtained by the complex microstructure high strength steel sheet composed of soft ferrite and a hard low temperature transformed phase, e.g., martensite.

Meanwhile, Patent Literature 1 proposes a technology to improve the stretch flange formability of a high strength hot rolled steel sheet with tensile strength: 500 N/mm$^2$ (500 MPa) or more by containing C: 0.03% to 0.20%, Si: 0.2% to 2.0%, Mn: 2.5% or less, P: 0.08% or less, and S: 0.005% on a percent by weight basis and employing a microstructure primarily containing bainitic·ferrite or a microstructure containing ferrite and bainitic·ferrite as the steel sheet microstructure. In this regard, according to the above-described technology, it is disclosed that high stretch flange formability can be given to a high strength material by generating a bainitic·ferrite microstructure, which has a lath microstructure and in which no carbide is generated and the dislocation density is high, in the steel. Also, it is disclosed that, in the case where a ferritic microstructure including reduced dislocation and having high ductility and good stretch flange formability is generated in addition to the bainitic·ferrite microstructure, both the strength and the stretch flange formability become good.

On the other hand, although not only the stretch flange formability is noted, Patent Literature 2 proposes a technology to improve the fatigue strength and the stretch flange formability of a high strength hot rolled steel sheet with tensile strength (TS): 490 MPa or more by specifying the composition to contain C: 0.01% to 0.10%, Si: 1.5% or less, Mn: more than 1.0% to 2.5%, P: 0.15% or less, S: 0.008% or less, Al: 0.01% to 0.08%, B: 0.0005% to 0.0030%, and one of Ti and Nb or total of the two: 0.10% to 0.60% on a percent by weight basis and employing a microstructure in which the amount of ferrite is 95% or more on an area fraction basis, the average grain size of ferrite is 2.0 to 10.0 μm, and martensite and retained austenite are not contained.

Also, Patent Literature 3 proposes a technology to ensure the bendability and the weldability of a hot rolled steel sheet and allowing the tensile strength (TS) thereof to become 950 N/mm$^2$ (950 MPa) or more by specifying the composition to contain C: 0.05% to 0.15%, Si: 1.5% or less, Mn: 0.70% to 2.50%, Ni: 0.25% to 1.5%, Ti: 0.12% to 0.30%, B: 0.0005% to 0.0030%, P: 0.020% or less, S: 0.010% or less, sol. Al: 0.010% to 0.10%, and N: 0.0050% or less on a weight ratio basis, specifying the ferrite grain size to be 10.0 μm or less, and precipitating TiC having a size of 10 nm or less and iron carbide having a size of 10 μm or less. In this regard, according to the above-described technology, it is disclosed that the steel sheet strength is enhanced and, in addition, the bendability is improved by allowing ferrite grains and TiC to become finer and specifying the Mn content to be 0.70% or more.

Also, Patent Literature 4 proposes a technology to prepare a hot rolled steel sheet having excellent stretch flange formability and, in addition, having a tensile strength (TS) of 70 kgf/mm$^2$ (686 MPa) or more by specifying the composition to contain C: 0.02% to 0.10%, Si $\leq$ 2.0%, Mn: 0.5% to 2.0%, P $\leq$ 0.08%, S $\leq$ 0.006%, N $\leq$ 0.005%, Al: 0.01% to 0.1%, and Ti: 0.06% to 0.3% on a percent by weight basis, where the amount of Ti satisfies 0.50 < (Ti - 3.43N - 1.5S)/4C, and employing the microstructure in which the area ratio of the low temperature transformed product and pearlite is 15% or less and TiC is dispersed in polygonal ferrite. In this regard, according to the above-described technology, it is disclosed that most of the steel sheet microstructure is specified to be polygonal ferrite containing a small amount of solid solution C, and the tensile strength (TS) is enhanced and, in addition, excellent stretch flange formability is obtained by TiC precipitation hardening and solid solution hardening due to Mn (content: 0.5% or more) and P.

Also, Patent Literature 5 proposes a thin steel sheet which is substantially composed of a matrix having a ferrite single phase and fine precipitates having a grain size of less than 10 nm and dispersing in the matrix and which has a tensile strength of 550 MPa or more and excellent press formability. The above-described technology discloses that, preferably, the composition contains C < 0.10%, Ti: 0.03% to 0.10%, and Mo: 0.05% to 0.6% on a percent by weight basis, where Fe is a primary component, and thereby, a thin steel sheet exhibiting good hole expanding ratio and good total elongation in spite of high strength is prepared. In addition, an example containing Si: 0.04% to 0.08% and Mn: 1.59% to 1.67% is shown.

Also, Patent Literature 6 proposes a technology to allow a hot rolled steel sheet to have a tensile strength of 690 to 850 MPa and, in addition, allow the hole expanding ratio to become 40% or more by specifying the composition to contain C: 0.015% to 0.06%, Si: less than 0.5%, Mn: 0.1% to 2.5%, P $\leq$ 0.10%, S $\leq$ 0.01%, Al: 0.005% to 0.3%, N $\leq$ 0.01%, Ti: 0.01% to 0.30%, and B: 2 to 50 ppm on a percent by mass basis, where a component balance between C, Ti, N, and S and Mn, Si, and B is regulated, and further employing the microstructure in which the area fraction of ferrite and bainitic ferrite is 90% or more in total and the area fraction of cementite is 5% or less.

Also, Patent Literature 7 proposes a technology to allow a hot rolled steel sheet to have a tensile strength of 690 MPa or more and, in addition, improve the punching ability and the hole expanding property by specifying the composition to contain C: 0.01% to 0.07%, Si: 0.01% to 2%, Mn: 0.05% to 3%, Al: 0.005% to 0.5%, N $\leq$ 0.005%, S $\leq$ 0.005%, and Ti: 0.03% to 0.2% on a percent by mass basis, where furthermore the P content is reduced to 0.01% or less, and employing the microstructure in which a ferrite or bainitic ferrite microstructure is specified to be a phase having a maximum area fraction and the area fraction of hard second phase and cementite is specified to be 3% or less.

Patent Literature 8 represents prior art according to Article 54(3) EPC and describes a high-strength steel sheet for warm press forming, characterized in that the tensile strength at room temperature is not less than 780 MPa, the yield stress at a heating temperature range of 400°C to 700°C is not more than 80% of the yield stress at room temperature, the total elongation at the heating temperature range is not less than 1.1 times the total elongation at room temperature, the yield stress of the steel sheet after the steel sheet is heated to the heating temperature range, subjected to a strain of not more than 20% and cooled from the heating temperature to room temperature is not less than 70% of the yield stress at room temperature before the heating, and the total elongation of the steel sheet after the steel sheet is heated to the heating temperature range, subjected to a strain of not more than 20% and cooled from the heating temperature to room temperature is not less than 70% of the total elongation at room temperature before the heating. The steel sheet has a chemical composition containing, in mass%: C: not less than 0.03% and not more than 0.14%, Si: not more than 0.3%, Mn: above 0.60% and not more than 1.8%, P: not more than 0.03%, S: not more than 0.005%, Al: not more than 0.1%, N: not more than 0.005%, and Ti: not more than 0.25%, the balance comprising Fe and inevitable impurities, and satisfying Expressions (1) and (2) below, and wherein the steel sheet includes a microstructure which has a matrix having a ferrite grain diameter of not less than 1 $\mu$m and a ferrite phase area fraction of not less than 95% and in which a carbide having an average particle diameter of not more than 10 nm is precipitated in the matrix:
Expressions:

$$([Ti]/48 + [V]/51 + [Mo]/96 + [W]/184 > 0.0031 \qquad (1)$$

$$0.8 \leq ([C]/12)/([Ti]/48 + [V]/51 + [Mo]/96 + [W]/184) \leq 1.20 \quad (2)$$

([C], [Ti], [V], [Mo] and W]: contents (mass%) of respective elements).

Patent Literature 9 describes a high tensile strength hot rolled steel sheet which is suitable for applications in which various machine parts and automobile parts are produced by performing precision blanking, has excellent dimensional precision in the precision blanking-worked face, also has extremely high surface hardness in the blanked face after the working, further has excellent red scale flaw resistance, and has a tensile strength of $\geq$ 490 MPa and a local elongation of $\geq$ 10%. The steel sheet has a composition comprising $\leq$ 0.10% C, < 0.01% Si, $\leq$ 1.5% Mn and $\leq$ 0.20% Al, further comprising Ti and Nb in the range satisfying (Ti+Nb)/2:0.05 to 0.50%, and comprising $\leq$ 0.005% S, $\leq$ 0.005% N and $\leq$ 0.004% O so as to control the total of S, N and O to $\leq$ 0.0100%, and has a microstructure substantially consisting of a ferrite single phase structure of $\geq$ 95%.

Patent Literature 10 describes a high strength hot rolled thin steel sheet which has excellent ductility in the strength range of about 590 to 1,000 MPa, has a fine grain structure mainly made up of ferrite and contains hyperfine precipitates, and a method for producing the same. The high strength hot rolled thin steel sheet has a composition comprising as components other than iron and steel making-induced impurities, by mass%, 0.02 to 0.15% C, $\leq$ 0.05% (not including zero) Si, 0.5 to 2.0% Mn and 0.05 to 0.25% Ti and has a structure including, as a main structure, ferrite of a grain size of $\leq$ 5 $\mu$m in which Ti-containing fine carbides evaluated by an X-ray small-angle scattering method are the disk-shaped ones with an average diameter of $\leq$ 10 nm and an average thickness of $\leq$ 5 nm, and are uniformly dispersed so as to be dense at a number density of $\geq$ 10$^{15}$ cm$^{-3}$.

[Citation List]

[Patent Literature]

[PTL 1] Japanese Unexamined Patent Application Publication No. 6-172924
[PTL 2] Japanese Unexamined Patent Application Publication No. 2000-328186
[PTL 3] Japanese Unexamined Patent Application Publication No. 8-73985
[PTL 4] Japanese Unexamined Patent Application Publication No. 6-200351
[PTL 5] Japanese Unexamined Patent Application Publication No. 2002-322539
[PTL 6] Japanese Unexamined Patent Application Publication No. 2007-302992
[PTL 7] Japanese Unexamined Patent Application Publication No. 2005-298924
[PTL 8] EP 2 735 623 A1
[PTL 9] JP 2004-137607 A
[PTL 10] JP 2010-053434 A

[Summary of Invention]

[Technical Problem]

However, as for the technology proposed in Patent Literature 1, if the ferrite content increases, further enhancement of strength cannot be expected. Meanwhile, in the case where a complex microstructure is employed by adding a hard second phase instead of ferrite for the purpose of enhancing the strength, there is a problem that, in stretch flange forming, cracking occurs from the interface between bainitic·ferrite and a hard second phase to cause fracture easily and the stretch flange formability is degraded as with the above-described ferrite-martensite complex microstructure steel sheet.

Also, in the technology proposed in Patent Literature 2, the stretch flange formability of the steel sheet is improved by allowing crystal grains to become finer. However, the tensile strength (TS) of the resulting steel sheet is about 680 MPa at most (refer to the example in Patent Literature 2). Therefore, there is a problem that further enhancement of strength cannot be expected. In addition, in the technology proposed in Patent Literature 2, it is necessary that more than 1% of Mn be contained. Consequently, fracture resulting from segregation of Mn occurs easily during forming, and it is difficult to ensure excellent stretch flange formability stably.

Also, in the technology proposed in Patent Literature 3, the bendability of the steel sheet has been studied, but the stretch flange formability of the steel sheet has not been studied. The bending and the hole expanding (stretch flange forming) are different in the forming property sort, and the bendability and the stretch flange formability are different in the properties required of the steel sheet. Therefore, there is a problem that a high strength steel sheet with excellent bendability does not always have good stretch flange formability.

As for the technology proposed in Patent Literature 4, large amounts of Mn and, furthermore, Si are contained for the purpose of enhancing the strength. Therefore, the hardenability of the steel is enhanced and it is difficult to obtain a microstructure primarily containing polygonal ferrite stably. Meanwhile, significant segregation occurs during casting because of these elements, so that fracture along the segregation occurs easily during forming and the stretch flange formability tends to be degraded. In addition, as is shown in the example thereof, the tensile strength of 780 MPa or more is not obtained stably in spite of the fact that addition of 1% or more of Mn is necessary.

Also, in the technology proposed in Patent Literature 5, the examples containing 1.59% to 1.67% of Mn are shown. Therefore, fracture due to the segregation of Mn occurs easily during forming and there is a problem that it is difficult to ensure excellent stretch flange formability stably even by the above-described technology.

Also, in the technology proposed in Patent Literature 6, as is shown in the examples thereof, it is necessary that 1% or more of Mn be added to increase the tensile strength of the steel sheet to 780 MPa or more, and if the Mn content is reduced to about 0.5%, the resulting tensile strength is as little as less than 750 MPa. That is, even the technology proposed in Patent Literature 6 cannot increase the tensile strength of the steel sheet to 780 MPa or more while the amount of Mn is reduced and excellent stretch flange formability is ensured.

Also, in the technology proposed in Patent Literature 7, as is shown in the examples thereof, the strength cannot be obtained unless at least about 1% of Mn is added, and it is difficult to obtain the stretch flange formability stably because of segregation due to this addition of Mn. Meanwhile, Patent Literature 7 discloses the example in which Ti, V, Nb, and Mo are added to C = 0.066%, Si = 0.06%, and Mn = 0.31%. In this example, it is necessary that a bainitic ferrite microstructure be formed by performing coiling at a low temperature of 540°C in order to avoid pearlite generation and, therefore, stable stretch flange formability is not obtained. Furthermore, Patent Literature 7 also discloses an example in which the Mn content is 0.24% and, in addition, the tensile strength is 810 MPa. This example contains a large amount, 1.25%, of easy-to-segregate Si in compensation for the strength and, likewise, stable stretch flange formability is not obtained.

As described above, it is not preferable that the steel sheet microstructure is specified to be a complex microstructure from the viewpoint of the stretch flange formability. In this regard, the stretch flange formability is improved by specifying the steel sheet microstructure to be a ferritic single phase, although it is difficult to ensure high strength of the ferritic single phase steel sheet in the related art while excellent stretch flange formability is maintained.

It is an object of the present invention to advantageously solve the above-described problems included in the related art and provide a high strength hot rolled steel sheet having tensile strength (TS): 780 MPa or more and excellent stretch flange formability and a method for manufacturing the same.

[Solution to Problem]

In order to solve the above-described issues, the present inventors noted a hot rolled steel sheet having a ferritic single phase with good formability and intensively studied on various factors exerting an influence on enhancement of the strength and stretch flange formability of the hot rolled steel sheet. As a result, it was found that Mn and Si, which had been previously considered to be very useful as solid solution hardening elements for enhancing the strength of the steel sheet and which had been positively contained in the high strength hot rolled steel sheet, adversely affect the stretch flange formability of the steel sheet.

Then, the present inventors observed the microstructure of a hot rolled steel sheet containing a large amount, about 1%, of Mn and Si. Consequently, it was ascertained that segregation of Mn and Si occurred unavoidably in the sheet thickness center portion thereof and it was found that a change in the shape of the microstructure resulting from segregation and unevenness in dislocation density and the like adversely affected the stretch flange formability. Then, with respect to the composition of the hot rolled steel sheet, it was found that the above-described influence of the segregation microstructure can be suppressed by reducing the Mn content and the Si content to a predetermined amount or less, specifically reducing both the Mn content and the Si content to contents further smaller than 1%.

On the other hand, reduction in the steel sheet strength along with reduction in the contents of Mn and Si serving as the solid solution hardening elements is not avoided. Therefore, the present inventors attempted to apply precipitation hardening due to Ti carbides as a hardening mechanism alternative to solid solution hardening due to Mn and Si. An effect of improving the steel sheet strength to a great extent can be expected by precipitating fine Ti carbides in the steel sheet. However, the Ti carbides become coarse easily. Consequently, as is shown by examples in the above-described patent literatures, it was difficult to precipitate Ti carbides in a fine state in the steel sheet and maintain the fine state by only simply containing Ti serving as a carbide-forming element into the steel sheet composition, and a sufficient strength enhancing effect was not obtained.

Then, the present inventors performed further studies to search for the means to precipitate Ti carbides in a fine state in the steel sheet and suppress coarsening thereof. As a result, it was found that coarsening of Ti carbides was able to be suppressed and Ti carbides were able to be made fine by adjusting the steel sheet composition to control the concentration ratio of the amount of Ti, which does not bond to N and S but bonds to C, to the amount of C.

In this regard, although the reasons the microstructure caused by Mn segregation present in the vicinity of the sheet thickness center portion of the steel sheet adversely affects the stretch flange formability are not certain, the present inventors consider as described below. In the case where a hole is punched and stretch flange forming to further expand the hole is performed, it is estimated that, if a microstructure caused by segregation (microstructure having a flat shape or a high dislocation density) is present in the center portion, early-stage cracking is formed easily around it, fracture proceeds in the sheet thickness direction because of forming (hole expanding forming) thereafter and, thereby, the hole expanding ratio is reduced.

The present invention has been completed on the basis of the above-described findings, and the gist thereof is as described below.

[1] A method for manufacturing a high strength hot rolled steel sheet comprising the steps of heating a semi-manufactured steel to an austenitic single phase region, performing hot rolling composed of rough rolling and finish rolling, and performing cooling and coiling after completion of the finish rolling to produce a hot rolled steel sheet, wherein the semi-manufactured steel has a composition containing C: more than 0.035% and 0.07% or less, Si: 0.3% or less, Mn: more than 0.35% and 0.5% or less, P: 0.03% or less, S: 0.03% or less, Al: 0.1% or less, N: 0.01% or less, Ti: 0.135% or more and 0.235% or less, optionally B: 0.0025% or less, optionally 1.0% or less of at least one of REM, Zr, Nb, V, As, Cu, Ni, Sn, Pb, Ta, W, Mo, Cr, Sb, Mg, Ca, Co, Se, Zn, and Cs in total, and the remainder composed of Fe and incidental impurities, on a percent by mass basis, in such a way that C, S, N, and Ti satisfy the formula (1) described below,

the finishing temperature of the finish rolling is specified to be 900°C or higher, the average cooling rate in the cooling from 900°C to 750°C is specified to be 10°C/sec. or more, and the coiling temperature in the coiling is specified to be 580°C or higher and 750°C or lower:

$$((Ti - (48/14)N - (48/32)S)/48)/(C/12) < 1.0 \quad (1)$$

(C, S, N, and Ti: content of the respective elements (percent by mass)).

[2] The method for manufacturing a high strength hot rolled steel sheet according to the above described item [1], wherein the composition contains B: 0.0025% or less on a percent by mass basis.

[3] The method for manufacturing a high strength hot rolled steel sheet according to the above described item [1] or [2], wherein the composition contains 1.0% or less of at least one of REM, Zr, Nb, V, As, Cu, Ni, Sn, Pb, Ta, W, Mo, Cr, Sb, Mg, Ca, Co, Se, Zn, and Cs in total on a percent by mass basis.

[4] The method for manufacturing a high strength hot rolled steel sheet according to any one of the above described items [1] to [3], wherein the hot rolled steel sheet is subjected to a coating treatment.

[5] The method for manufacturing a high strength hot rolled steel sheet according to the above described items [4], wherein the hot rolled steel sheet is subjected to an alloying treatment following the coating treatment.

[6] A high strength hot rolled steel sheet obtainable by the method according to the above described item [1], wherein the high strength hot rolled steel sheet comprises
a composition containing C: more than 0.035% and 0.07% or less, Si: 0.3% or less, Mn: more than 0.35% and 0.5% or less, P: 0.03% or less, S: 0.03% or less, Al: 0.1% or less, N: 0.01% or less, Ti: 0.135% or more and 0.235% or less, optionally B: 0.0025% or less, optionally 1.0% or less of at least one of REM, Zr, Nb, V, As, Cu, Ni, Sn, Pb, Ta, W, Mo, Cr, Sb, Mg, Ca, Co, Se, Zn, and Cs in total, and the remainder composed of Fe and incidental impurities, on a percent by mass basis, in such a way that C, S, N, and Ti satisfy the formula (1) described below,
a microstructure in which a matrix includes more than 95% of ferritic phase on an area fraction basis and fine Ti carbides having an average grain size of less than 10 nm are precipitated in the grains of the ferritic phase, and
a tensile strength TS of 780 MPa or more:

$$((Ti - (48/14)N - (48/32)S)/48)/(C/12) < 1.0 \quad (1)$$

(C, S, N, and Ti: content of the respective elements (percent by mass)).

[7] The high strength hot rolled steel sheet according to the above described item [6], wherein the composition contains B: 0.0025% or less on a percent by mass basis.

[8] The high strength hot rolled steel sheet according to the above described item [6] or [7], wherein the composition contains 1.0% or less of at least one of REM, Zr, Nb, V, As, Cu, Ni, Sn, Pb, Ta, W, Mo, Cr, Sb, Mg, Ca, Co, Se, Zn, and Cs in total on a percent by mass basis.

[9] The high strength hot rolled steel sheet according to any one of the above described items [6] to [8], wherein a coating layer is included on the steel sheet surface.

[Advantageous Effects of Invention]

According to the present invention, a high strength hot rolled steel sheet, which is suitable for parts of automobiles and other transportation machines and structural steels, e.g., construction steels, and which has high strength of tensile strength (TS): 780 MPa or more and excellent stretch flange formability in combination, is obtained. Therefore, further uses of the high strength hot rolled steel sheet can be developed and a remarkable industrial effect is exerted.

[Brief Description of Drawings]

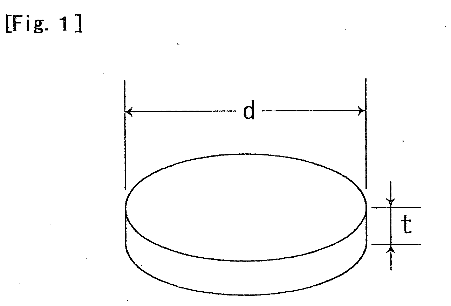

[Fig. 1] Fig. 1 is a diagram schematically showing a precipitation shape of a Ti carbide.

[Description of Embodiments]

The present invention will be described below in detail. A hot rolled steel sheet according to the present invention is characterized in that substantially a ferritic single phase is employed and, in addition, improvement in the stretch flange formability is aimed by reduction and rendering harmless of Mn segregation and, in addition, Si segregation in the sheet thickness center portion through decreases in the Mn content and, in addition, the Si content in the steel sheet. Also, the hot rolled steel sheet according to the present invention is characterized in that enhancement of the strength of the steel sheet is aimed by precipitating fine Ti carbides, controlling the amount of C to be bonded to the amount of Ti in the steel composition in such a way as to become larger than the amount of Ti and generate no pearlite, and suppressing growth and coarsening of fine Ti carbides through reduction of the amount of solid solution Ti.
To begin with, reasons for the limitation of the microstructure and carbides of the steel sheet according to the present invention will be described.
The hot rolled steel sheet according to the present invention has a microstructure in which a matrix includes more than 95% of ferritic phase on an area fraction basis and fine Ti carbides having an average grain size of less than 10 nm are precipitated in the grains of the above-described ferritic phase.

Ferritic phase: more than 95% in the matrix on an area fraction basis

In the present invention, formation of the ferritic phase is indispensable for ensuring the stretch flange formability of the hot rolled steel sheet. It is effective for improving the ductility and the stretch flange formability of the hot rolled steel sheet to specify the matrix microstructure of the hot rolled steel sheet to be a ferritic phase having a small dislocation density and excellent ductility. In particular, it is preferable for improving the stretch flange formability that the matrix microstructure of the hot rolled steel sheet is specified to be a ferritic single phase. Even in the case of not perfect ferritic single phase, a substantially ferritic single phase, that is, a ferrite phase constituting more than 95% of the whole matrix microstructure on an area fraction basis exerts the above-described effect sufficiently. Therefore, the area fraction of the ferritic phase is specified to be more than 95%, and preferably 97% or more.
Meanwhile, in the hot rolled steel sheet according to the present invention, examples of microstructures, which may be contained in the matrix, other than the ferritic phase include cementite, pearlite, a bainitic phase, a martensitic phase, and a retained austenitic phase. If these microstructures are present in the matrix, the stretch flange formability is degraded. However, these microstructures are permitted when a total area fraction relative to the whole matrix microstructure is less than about 5%, and preferably about 3% or less.

Ti carbide

As described above, with respect to the hot rolled steel sheet according to the present invention, an increase in the steel sheet strength due to solid solution hardening cannot be expected because the contents of Mn and Si serving as solid solution hardening elements are reduced for the purpose of suppressing Mn segregation and, in addition, Si segregation in the sheet thickness center portion, which adversely affect the stretch flange formability. Consequently, in the hot rolled steel sheet according to the present invention, precipitation of fine Ti carbides in grains of the ferritic phase is indispensable for ensuring the strength. In this regard, the Ti carbides are carbides precipitated at interfaces of phases at the same time with the transformation from austenite to ferrite during cooling after completion of finish rolling in a hot rolled steel sheet production process or aging precipitation carbides precipitated in ferrite after ferrite transformation.

Average grain size of Ti carbides: less than 10 nm

The average grain size of Ti carbides is very important for giving predetermined strength (tensile strength: 780 MPa or more) to the hot rolled steel sheet. In the present invention, the average grain size of Ti carbides is specified to be less than 10 nm. In the case where fine Ti carbides are precipitated in grains of the above-described ferritic phase, Ti carbides act as resistance against the movement of dislocation generated when deformation is applied to the steel sheet and, thereby, the hot rolled steel sheet is strengthened. However, Ti carbides become sparse along with coarsening of Ti carbides, and the distance of stopping of dislocation increases, so that the precipitation hardening ability is degraded. Then, if the average grain size of Ti carbides becomes 10 nm or more, the steel sheet strengthening ability sufficient for compensating the amount of reduction in the steel sheet strength resulting from reduction in the contents of Mn and Si serving as solid solution hardening elements is not obtained. Therefore, the average grain size of Ti carbides is specified to be less than 10 nm, and more preferably 6 nm or less.

In this regard, it was ascertained that the shape of the Ti carbide in the present invention was nearly the shape of a disc (shape of a circular plate) as schematically shown in Fig. 1. The average grain size $d_{def}$ of Ti carbides in the present invention is defined by the arithmetic average value, $D_{def} = (d + t)/2$, of a maximum diameter d of the observed nearly disc-shaped precipitate (diameter of a largest portion of the upper and lower surfaces of the disc) and the thickness t of the nearly disc-shaped precipitate in a direction orthogonal to the upper and lower surfaces of the disc.

Meanwhile, although the effect of the present invention is not specifically limited, the form of precipitation of fine Ti carbides in the present invention may be observed in the shape of a row. However, even in this case, precipitation is at random in the plane containing the row of the individual row-shaped precipitates and, in many cases, precipitates are not observed in the shape of a row on the basis of actual observation with a transmission electron microscope.

Next, reasons for the limitation of the chemical composition of the hot rolled steel sheet according to the present invention will be described. In this regard, "%" expressing the chemical composition hereafter refers to "percent by mass" unless otherwise specified.

C: more than 0.035% and 0.07% or less

Carbon is an element indispensable for strengthening the hot rolled steel sheet by forming Ti carbides in the steel sheet. If the C content is 0.035% or less, Ti carbides to bring the tensile strength to 780 MPa or more cannot be ensured and the tensile strength of 780 MPa or more is not obtained. On the other hand, if the C content is more than 0.07%, pearlite is generated easily, and the stretch flange formability is degraded. Therefore, the C content is specified to be more than 0.035% and 0.07% or less, and more preferably 0.04% or more and 0.06% or less.

Si: 0.3% or less

Silicon is an element effective for enhancing the steel sheet strength without causing degradation in the ductility (elongation) and is usually positively contained in a high strength steel sheet. However, Si facilitates Mn segregation in the sheet thickness center portion, which should be avoided in the hot rolled steel sheet according to the present invention, and in addition, Si in itself is an element which segregates. Therefore, in the present invention, the Si content is limited to 0.3% or less for the purpose of suppressing the above-described Mn segregation and suppressing Si segregation. The Si content is more preferably 0.1% or less, and further preferably 0.05% or less.

Mn: more than 0.35% and 0.5% or less

Manganese is a solid solution hardening element and, as with Si, is positively contained in a common high strength steel sheet. However, if Mn is positively contained in the steel sheet, Mn segregation in the sheet thickness center portion is not avoided, and degradation in the stretch flange formability of the steel sheet is brought about. Therefore, in the present invention, the Mn content is limited to 0.5% or less for the purpose of suppressing the above-described Mn segregation. On the other hand, if the Mn content is 0.35% or less, the austenite-ferrite transformation temperature increases and, thereby, it is difficult to make Ti carbides finer. As described above, Ti carbides are precipitated at the same time with the transformation from austenite to ferrite during cooling after completion of finish rolling in the hot rolled steel sheet production process or are aging-precipitated in ferrite. At this time, if the austenite-ferrite transformation temperature becomes a high temperature, Ti carbides become coarse because of precipitation in a high temperature range. Therefore, the lower limit of the Mn content is specified to be more than 0.35%.

P: 0.03% or less

Phosphorus is a harmful element which segregates at grain boundaries to reduce elongation and induce fracture during forming. Therefore, the P content is specified to be 0.03% or less, more preferably 0.020% or less, and further preferably 0.010% or less.

S: 0.03% or less

Sulfur is present as MnS or TiS in the steel to facilitate generation of voids during punching of the hot rolled steel sheet and, furthermore, serve as a starting point of a void during forming, so that the stretch flange formability is degraded. Therefore, in the present invention, the S content is preferably minimized and is specified to be 0.03% or less. The S content is more preferably 0.010% or less, and further preferably 0.0030% or less.

Al: 0.1% or less

Aluminum is an element serving as a deoxidizing agent. In order to obtain such an effect, it is desirable that the content be 0.01% or more. However, if Al is more than 0.1%, Al oxides remain in the steel sheet, the Al oxides tend to aggregate and become coarse easily and cause degradation in the stretch flange formability. Therefore, the Al content is specified to be 0.1% or less, and more preferably 0.065% or less.

N: 0.01% or less

In the present invention, N is a harmful element and is preferably minimized. Nitrogen is bonded to Ti to form TiN. If the N content is more than 0.01%, the stretch flange formability is degraded because of an increase in the amount of TiN formed. Therefore, the N content is specified to be 0.01% or less, and more preferably 0.006% or less.

Ti: 0.135% or more and 0.235% or less

Titanium is an element indispensable for forming Ti carbides and enhancing the strength of the steel sheet. If the Ti content is less than 0.135%, it becomes difficult to ensure a predetermined hot rolled steel sheet strength (tensile strength: 780 MPa or more). On the other hand, if the Ti content is more than 0.235%, Ti carbides tend to become coarse, and it becomes difficult to ensure a predetermined hot rolled steel sheet strength (tensile strength: 780 MPa or more). Therefore, the Ti content is specified to be 0.135% or more and 0.235% or less, and more preferably 0.15% or more and 0.20% or less.

The hot rolled steel sheet according to the present invention contains C, S, N, and Ti in the above-described ranges in such a way that the formula (1) is satisfied.

$$((Ti - (48/14)N - (48/32)S)/48)/(C/12) < 1.0 \qquad (1)$$

(C, S, N, and Ti: content of the respective elements (percent by mass))

The above-described formula (1) is a requirement to be satisfied for specifying the average grain size of Ti carbides to be less than 10 nm and is a very important indicator in the present invention.

As described above, in the present invention, a predetermined steel sheet strength is ensured by precipitating fine Ti carbides in the hot rolled steel sheet. Here, the Ti carbides tend to become fine carbides having a very small average grain size. However, if the atomic concentration of Ti contained in the steel becomes larger than or equal to the atomic concentration of C, the Ti carbides become coarse easily. Then, along with coarsening of carbides, it becomes difficult to ensure a predetermined hot rolled steel sheet strength (tensile strength: 780 MPa or more). In the present invention, it is necessary that the atomic percent of C ((percent by mass of C)/12) contained in the steel is specified to be larger than the atomic percent of Ti ((percent by mass of Ti)/48) contributable to carbide generation. In this regard, in the case where the steel composition is controlled as described above, the number of Ti atoms in the Ti carbides becomes smaller than the number of C atoms, so that the effect of suppressing Ti carbides from becoming coarse is enhanced.

Meanwhile, as described later, in the present invention, a predetermined amount of Ti is added to a steel, carbides in the steel is melted by heating before hot rolling, and Ti carbides are precipitated mainly during coiling after hot rolling. However, the whole amount of Ti added to the steel does not contribute to carbide generation and part of Ti added to the steel is consumed to form nitrides and sulfides. In a temperature region higher than the coiling temperature, Ti forms nitrides and sulfides easily as compared with carbides because Ti forms nitrides and sulfides before the coiling step in production of the hot rolled steel sheet. Therefore, the amount of Ti, which contributes to carbide generation, in Ti added to the steel can be represented by "Ti - (48/14)N - (48/32)S".

For the reasons described above, in the present invention, the individual elements, C, S, N, and Ti, are contained in such a way as to satisfy the above-described formula (1), that is, ((Ti - (48/14)N - (48/32)S/48)/(C/12) < 1.0, for the purpose of allowing the atomic percent of C (C/12) to become larger than the atomic percent of Ti ((Ti - (48/14)N - (48/32)S)/48) contributable to carbide generation. In the case where the above-described formula (1) is not satisfied, Ti carbides generated in ferrite grains cannot be maintained in a fine state (average grain size of less than 10 nm), and it becomes difficult to obtain a predetermined steel sheet strength (tensile strength: 780 MPa or more).

In this regard, for the purpose of allowing Ti carbides to become finer, the value of the left side of the above-described formula (1), that is, the value of ((Ti - (48/14)N - (48/32)S)/48)/(C/12), is specified to be preferably 0.5 or more and 0.95 or less, and more preferably 0.6 or more and 0.9 or less.

Meanwhile, carbides in the steel are melted by heating of the steel before hot rolling, and usually, the Ti carbides are precipitated at interfaces of phases at the same time with the transformation from austenite to ferrite during cooling after hot rolling or are aging-precipitated in ferrite. Here, if the temperature of transformation from austenite to ferrite of the steel is high, Ti carbides are precipitated in a high temperature region, in which the diffusion rate of Ti is large, after the hot rolling, so that Ti carbides become coarse easily. However, Ti carbides are suppressed from becoming coarse effectively by lowering the temperature of transformation from austenite to ferrite (Ar$_3$ transformation temperature) to the coiling temperature range (that is, the temperature region in which the diffusion rate of Ti is small).

Then, in the present invention, B: 0.0025% or less can be further contained in addition to the above-described composition for the purpose of retarding the transformation from austenite to ferrite of the steel and lowering stably the precipitation temperature (Ar$_3$ transformation temperature) of Ti carbides to the coiling temperature range described later.

B: 0.0025% or less

Boron is an element to retard the start of austenite-ferrite transformation of the steel and lowers the precipitation temperature of Ti carbides by suppressing the austenite-ferrite transformation, so as to contribute to making the carbides finer. In particular, in the case where Mn is reduced to a great extent for the purpose of avoiding segregation, lowering of the Ar$_3$ transformation point due to Mn cannot be expected and, therefore, it is preferable that the austenite-ferrite transformation be retarded by containing B. Consequently, even in the case where the Mn content is reduced to a great extent (for example, Mn: 0.5% or less), Ti carbides can be made finer stably. On the other hand, if the B content is more than 0.0025%, a bainite transformation effect due to B is enhanced, and it becomes difficult to convert to a ferrite microstructure. Therefore, the B content is specified to be 0.0025% or less. On the other hand, addition of more than 0.0010% may reduce elongation because solid solution B inhibits the movement of dislocation, so that the B content is more preferably 0.0002% or more and 0.0010% or less, and further preferably 0.0002% or more and 0.0007% or less.

The hot rolled steel sheet according to the present invention may further contain 1.0% or less of at least one of REM, Zr, Nb, V, As, Cu, Ni, Sn, Pb, Ta, W, Mo, Cr, Sb, Mg, Ca, Co, Se, Zn, and Cs in total in addition to the above-described composition. In this regard, the components other than those described above are Fe and incidental impurities.

Meanwhile, in the case where a coating layer is disposed on the surface of the hot rolled steel sheet according to the present invention for the purpose of giving the corrosion resistance to the steel sheet, the above-described effects of the present invention are not impaired. In this regard, in the present invention, the type of the coating layer disposed on the steel sheet surface is not specifically limited, and any type, e.g., electroplated coating and hot dip coating, may be employed. Also, examples of hot dip coating include hot dip galvanized coating. Furthermore, hot dip galvannealed coating may be employed, where an alloying treatment is performed after coating.

Next, a method for manufacturing the hot rolled steel sheet according to the present invention will be described.

In the present invention, a semi-manufactured steel having the above-described composition is heated to an austenitic single phase region, hot rolling composed of rough rolling and finish rolling is performed, and cooling and coiling are performed after completion of the finish rolling to produce a hot rolled steel sheet. At this time, the invention is characterized in that the finishing temperature of the finish rolling is specified to be 900°C or higher, the average cooling rate in the cooling from 900°C to 750°C is specified to be 10°C/sec. or more, and the coiling temperature is specified to be 580°C or higher and 750°C or lower.

In the present invention, the method for melt-refining the steel is not specifically limited, and a known melt-refining method, e.g., a converter or an electric furnace, can be adopted. In this regard, after the melt-refining, it is preferable that a slab (semi-manufactured steel) be prepared by a continuous casting method from the viewpoint of productivity and the like. However, the slab may be prepared by a known casting method, e.g., an ingot making-roughing method or a thin slab continuous casting method. Meanwhile, in the present invention, the Mn content and the Si content causing segregation are reduced for the purpose of improving the formability (stretch flange formability and the like). Consequently, in the case where the continuous casting method advantageous to suppress segregation is adopted, the effects of the present invention become still more considerable.

The semi-manufactured steel obtained as described above is subjected to rough rolling and finish rolling. In the present invention, the semi-manufactured steel is heated to an austenitic single phase region prior to the rough rolling. If the semi-manufactured steel before the rough rolling is not heated to the austenitic single phase region, remelting of Ti carbides present in the semi-manufactured steel does not proceed, and precipitation of fine Ti carbides after rolling is not achieved. Therefore, in the present invention, the semi-manufactured steel is heated to the austenitic single phase region, preferably 1,200°C or higher, prior to the rough rolling. However, if the heating temperature of the semi-manufactured steel is too high, the surface is excessively oxidized, Ti is consumed because of generation of $TiO_2$, and reduction in hardness occurs easily in the vicinity of the surface of the resulting steel sheet. Consequently, the above-described heating temperature is specified to be more preferably 1,350°C or lower. In this regard, when the semi-manufactured steel is subjected to hot rolling, in the case where the temperature of the semi-manufactured steel (slab) after casting is in the austenitic single phase region, the semi-manufactured steel may be directly rolled without heating the semi-manufactured steel or after short-time heating. Meanwhile, it is not necessary that the rough rolling condition is specifically limited.

Finish rolling temperature: 900°C or higher

Optimization of the finish rolling temperature is important for ensuring the stretch flange formability of the hot rolled steel sheet. If the finish rolling temperature is lower than 900°C, a band-shaped microstructure is formed easily at the position, at which Mn has segregated, in the sheet thickness center portion of a finally obtained hot rolled steel sheet, and the stretch flange formability is degraded easily. Therefore, the finish rolling temperature is specified to be 900°C or higher, and more preferably 920°C or higher. Also, the finish rolling temperature is specified to be more preferably 1,050°C or lower from the viewpoint of prevention of a flaw and roughing due to secondary scales of the surface.

Average cooling rate: 10°C/sec. or more

As described above, in the present invention, it is necessary that fine Ti carbides be precipitated. For this purpose, the temperature of the austenite-ferrite transformation is lowered to facilitate precipitation of fine Ti carbides, suppress coarsening, and ensure a predetermined average grain size (less than 10 nm). Here, Ti carbides are precipitated on the basis of ferrite transformation of the steel microstructure from austenite after completion of the above-described finish rolling. If the austenite-ferrite transformation point ($Ar_3$ transformation temperature) is higher than 750°C, large Ti carbides grow easily.

Then, in the present invention, for the purpose of specifying the austenite-ferrite transformation point ($Ar_3$ transformation temperature) to be 750°C or lower, after the finish rolling is completed, the average cooling rate in the cooling from 900°C to 750°C is specified to be 10°C/sec. or more, and more preferably 30°C/sec. or more.

Consequently, the average cooling rate is increased and, thereby, the austenite-ferrite transformation point ($Ar_3$ transformation temperature) is specified to be 750°C or lower, that is, in the temperature region of the coiling temperature described later, so that disc-shaped Ti carbides are maintained in a fine state. However, if the above-described average cooling rate increases excessively, there may be a problem that a hardened microstructure is generated only in the surface layer easily. Therefore, the average cooling rate in the cooling from 900°C to 750°C after the finish rolling is completed is specified to be more preferably 600°C/sec. or less.

Coiling temperature: 580°C or higher and 750°C or lower

Optimization of the coiling temperature is important for specifying the above-described austenite-ferrite transformation point ($Ar_3$ transformation temperature) to be 750°C or lower, and allowing the hot rolled steel sheet to have a predetermined matrix microstructure (area fraction of ferritic phase: more than 95%). If the coiling temperature is lower than 580°C, martensite and bainite are generated easily and it becomes difficult to specify the matrix to be substantially a ferritic single phase. On the other hand, if the coiling temperature is higher than 750°C, pearlite is generated easily and the stretch flange formability is degraded. Also, if the coiling temperature is higher than 750°C, the austenite-ferrite transformation temperature cannot be made 750°C or lower, and coarsening of Ti carbides is induced. Therefore, the coiling temperature is specified to be 580°C or higher and 750°C or lower, and more preferably 610°C or higher and 690°C or lower.

As described above, in the present invention, after the cooling following the finish rolling, austenite-ferrite transformation is allowed to occur in an temperature region of 750°C or lower. Consequently, the austenite-ferrite transformation occurs easily in the vicinity of the coiling temperature, and the coiling temperature tends to substantially agree with the austenite-ferrite transformation temperature.

Meanwhile, it is further preferable that the coil after coiling be held in a temperature range of 580°C to 750°C for 60 sec. or more because a uniform microstructure is obtained easily.

In addition, in the present invention, a coating layer may be formed on the steel sheet surface by subjecting the hot rolled steel sheet produced as described above to a coating treatment. The coating treatment may be any one of electroplating and hot dipping. For example, a galvanized coating layer can be formed by applying a galvanizing treatment as the coating treatment. Alternatively, galvannealed coating layer may be formed by further applying an alloying treatment after the above-described galvanizing treatment. Also, the hot dipped coating can be coated with aluminum, an aluminum alloy, or the like other than zinc. The high strength hot rolled steel sheet according to the present invention is suitable for common press forming performed at ambient temperature and, in addition, is suitable for warm forming in which a steel sheet before pressing is heated from 400°C to 750°C and is immediately subjected to forming.

[EXAMPLES]

Molten steels having compositions shown in Table 1 (Table 1-1 and Table 1-2, the same goes hereafter) were melt-refined and continuously cast by a usually known technique to prepare slabs (semi-manufactured steels) having a thickness of 300 mm. These slabs were heated to temperatures shown in Table 2 and were roughly rolled. Finish rolling at a finish rolling temperature shown in Table 2 was applied and after the finish rolling was completed, the temperature region of from 900°C to 750°C was cooled at an average cooling rate shown in Table 2, and coiling was performed at a coiling temperature shown in Table 2, so that a hot rolled steel sheet having a sheet thickness: 2.3 mm was produced. In this regard, it was separately ascertained that the transformation from austenite to ferrite did not occur during the cooling up to the coiling except Steel No. 22.

Subsequently, the hot rolled steel sheets obtained as described above were pickled to remove surface layer scales. Thereafter, part of the hot rolled steel sheets (Steel Nos. 6 and 7) were dipped into a galvanizing bath (0.1%Al-Zn) at 480°C to form galvanized coating layers on both surfaces of the steel sheet, where the amount of deposit per one surface was 45 g/m$^2$, so that galvanized steel sheets were produced. Also, other part of the hot rolled steel sheets (Steel Nos. 8, 9, and 10) were provided with galvanized coating layers in the same manner as that described above and were subjected to the alloying treatment at 520°C, so that galvannealed steel sheets were produced.

[Table 1-1]

[Table 1-1]

| Steel No. | Chemical component (mass%) | | | | | | | | | | Value of left side of formula (1) *1 |
|---|---|---|---|---|---|---|---|---|---|---|---|
| | C | Si | Mn | P | S | Al | N | Ti | B | Others | |
| 1 | 0.031 | 0.01 | 0.42 | 0.012 | 0.0007 | 0.035 | 0.0031 | 0.152 | - | - | 1.132 |
| 2 | 0.037 | 0.01 | 0.41 | 0.013 | 0.0008 | 0.033 | 0.0032 | 0.151 | - | - | 0.938 |
| 3 | 0.047 | 0.01 | 0.42 | 0.012 | 0.0009 | 0.031 | 0.0033 | 0.151 | - | - | 0.736 |
| 4 | 0.056 | 0.01 | 0.42 | 0.012 | 0.0006 | 0.034 | 0.0031 | 0.150 | - | - | 0.618 |
| 5 | 0.090 | 0.01 | 0.41 | 0.012 | 0.0008 | 0.035 | 0.0031 | 0.152 | - | - | 0.389 |
| 6 | 0.046 | 0.05 | 0.39 | 0.011 | 0.0031 | 0.032 | 0.0044 | 0.162 | 0.0008 | - | 0.773 |
| 7 | 0.042 | 0.08 | 0.38 | 0.015 | 0.0041 | 0.075 | 0.0035 | 0.164 | 0.0008 | - | 0.868 |
| 8 | 0.041 | 0.01 | 0.61 | 0.011 | 0.0023 | 0.036 | 0.0049 | 0.179 | 0.0009 | - | 0.968 |
| 9 | 0.038 | 0.05 | 0.47 | 0.009 | 0.0008 | 0.042 | 0.0055 | 0.143 | - | - | 0.809 |
| 10 | 0.052 | 0.06 | 0.39 | 0.021 | 0.0007 | 0.055 | 0.0069 | 0.215 | - | - | 0.915 |
| 11 | 0.061 | 0.06 | 0.68 | 0.007 | 0.0009 | 0.035 | 0.0031 | 0.196 | - | - | 0.754 |
| 12 | 0.042 | 0.09 | 0.55 | 0.016 | 0.0012 | 0.031 | 0.0043 | 0.088 | - | - | 0.425 |
| 13 | 0.041 | 0.08 | 0.55 | 0.017 | 0.0014 | 0.031 | 0.0042 | 0.141 | - | - | 0.759 |
| 14 | 0.044 | 0.09 | 0.55 | 0.016 | 0.0013 | 0.039 | 0.0041 | 0.189 | - | - | 0.983 |
| 15 | 0.041 | 0.08 | 0.56 | 0.016 | 0.0012 | 0.032 | 0.0042 | 0.299 | - | - | 1.724 |
| 16 | 0.050 | 0.02 | 0.37 | 0.015 | 0.0009 | 0.051 | 0.0041 | 0.187 | 0.0003 | - | 0.858 |
| 17 | 0.051 | 0.03 | 0.42 | 0.015 | 0.0008 | 0.052 | 0.0044 | 0.186 | 0.0004 | - | 0.832 |
| 18 | 0.054 | 0.02 | 0.49 | 0.016 | 0.0009 | 0.053 | 0.0042 | 0.187 | 0.0006 | - | 0.793 |
| 19 | 0.053 | 0.02 | 0.65 | 0.015 | 0.0008 | 0.051 | 0.0044 | 0.187 | 0.0012 | - | 0.805 |

(continued)

| Steel No. | Chemical component (mass%) | | | | | | | | | | Value of left side of formula (1) *1 |
|---|---|---|---|---|---|---|---|---|---|---|---|
| | C | Si | Mn | P | S | Al | N | Ti | B | Others | |
| 20 | 0.050 | 0.02 | 1.02 | 0.016 | 0.0008 | 0.052 | 0.0047 | 0.187 | 0.0018 | - | 0.848 |
| 21 | 0.035 | 0.10 | 0.50 | 0.010 | 0.0033 | 0.030 | 0.0035 | 0.130 | 0.0030 | Nb : 0.03 | 0.808 |
| 22 | 0.029 | 1.25 | 0.24 | 0.004 | 0.0008 | 0.025 | 0.0027 | 0.140 | - | - | 1.117 |
| 23 | 0.030 | 1.02 | 1.49 | 0.011 | 0.0008 | 0.028 | 0.0025 | 0.110 | - | - | 0.835 |
| 24 | 0.046 | 0.03 | 0.39 | 0.019 | 0.0028 | 0.054 | 0.0048 | 0.165 | | Se: 0.0052 | 0.784 |

[Table 1-2]

[Table 1-2]

| Steel No. | Chemical component | | | | | | | | | (mass%) | Value of left side of formula (1) *1 |
| | C | Si | Mn | P | S | Al | N | Ti | B | Others | |
|---|---|---|---|---|---|---|---|---|---|---|---|
| 25 | 0.045 | 0.04 | 0.38 | 0.018 | 0.0029 | 0.055 | 0.0049 | 0.164 | | Cu:0.08, Ni:0.12 | 0.794 |
| 26 | 0.046 | 0.03 | 0.39 | 0.021 | 0.0028 | 0.051 | 0.0051 | 0.166 | | Sn:0.0077, Cu:0.11 | 0.784 |
| 27 | 0.046 | 0.03 | 0.38 | 0.019 | 0.0029 | 0.052 | 0.0049 | 0.167 | | Ca:0.0008 | 0.793 |
| 28 | 0.047 | 0.03 | 0.38 | 0.018 | 0.0028 | 0.052 | 0.0048 | 0.165 | | Mo:0.08, Cr:0.088 | 0.768 |
| 29 | 0.045 | 0.03 | 0.39 | 0.019 | 0.0028 | 0.051 | 0.0049 | 0.165 | | As: 0.0012, Sb: 0.0075 | 0.800 |
| 30 | 0.039 | 0.06 | 0.43 | 0.008 | 0.0036 | 0.032 | 0.0041 | 0.158 | - | Co:0.0045 | 0.888 |
| 31 | 0.038 | 0.06 | 0.42 | 0.007 | 0.0036 | 0.033 | 0.0044 | 0.159 | - | V:0.07, Nb:0.01 | 0.911 |
| 32 | 0.039 | 0.05 | 0.43 | 0.008 | 0.0035 | 0.032 | 0.0042 | 0.157 | 0.0005 | Zr:0.08, V:0.05 | 0.880 |
| 33 | 0.038 | 0.06 | 0.44 | 0.007 | 0.0034 | 0.034 | 0.0041 | 0.159 | 0.0004 | Mg:0.0023, Ta:0.01 | 0.920 |
| 34 | 0.049 | 0.01 | 0.42 | 0.012 | 0.0045 | 0.071 | 0.0051 | 0.165 | - | Cs:0.0038 | 0.718 |
| 35 | 0.048 | 0.06 | 0.61 | 0.015 | 0.0028 | 0.063 | 0.0045 | 0.178 | - | Ta: 0.008, Pb:0.005 | 0.825 |
| 36 | 0.047 | 0.12 | 0.55 | 0.021 | 0.0033 | 0.056 | 0.0050 | 0.147 | - | Mo:0.12 | 0.664 |
| 37 | 0.048 | 0.05 | 0.67 | 0.008 | 0.0018 | 0.031 | 0.0049 | 0.138 | - | Mo:0.07, W:0.13 | 0.617 |
| 38 | 0.048 | 0.04 | 0.58 | 0.015 | 0.0008 | 0.067 | 0.0049 | 0.154 | 0.0005 | Cu:0.2, Ni:0.4, Sn:0.006 | 0.708 |
| 39 | 0.049 | 0.02 | 0.64 | 0.016 | 0.0043 | 0.069 | 0.0052 | 0.167 | 0.0003 | Zn:0.0005 | 0.728 |
| 40 | 0.048 | 0.01 | 0.36 | 0.015 | 0.0056 | 0.025 | 0.0053 | 0.171 | 0.0016 | REM:0.11 | 0.752 |
| 41 | 0.060 | 0.76 | 1.53 | 0.019 | 0.0050 | 0.037 | 0.0035 | 0.250 | - | - | 0.960 |
| 42 | 0.050 | 0.68 | 1.59 | 0.017 | 0.0020 | 0.036 | 0.0035 | 0.220 | - | - | 1.025 |
| 43 | 0.061 | 0.03 | 0.54 | 0.012 | 0.0008 | 0.041 | 0.0038 | 0.174 | - | - | 0.655 |
| 44 | 0.061 | 0.02 | 0.54 | 0.013 | 0.0007 | 0.042 | 0.0035 | 0.174 | - | - | 0.660 |
| 45 | 0.062 | 0.03 | 0.55 | 0.012 | 0.0007 | 0.043 | 0.0037 | 0.174 | - | - | 0.646 |
| 46 | 0.061 | 0.03 | 0.55 | 0.013 | 0.0008 | 0.041 | 0.0035 | 0.173 | - | - | 0.655 |

(continued)

| Steel No. | Chemical component | | | | | | | (mass%) | | | Value of left side of formula (1) *1 |
|---|---|---|---|---|---|---|---|---|---|---|---|
| | C | Si | Mn | P | S | Al | N | Ti | B | Others | |
| 47 | 0.062 | 0.02 | 0.54 | 0.012 | 0.0007 | 0.042 | 0.0034 | 0.174 | - | - | 0.650 |
| *1) Value of ((Ti-(48/14)N-(48/32)S)/48)/(C/12) | | | | | | | | | | | |

[Table 2]

[Table 2]

| Steel No. | Hot rolling step | | | | Remarks |
|---|---|---|---|---|---|
| | Heating temperature (°C) | Finish rolling temperature (°C) | Average cooling rate (°C/s) *2 | Coiling temperature (°C) | |
| 1 | 1250 | 920 | 70 | 640 | Comparative example |
| 2 | 1250 | 920 | 70 | 640 | Invention example |
| 3 | 1250 | 920 | 70 | 640 | Invention example |
| 4 | 1250 | 920 | 70 | 640 | Invention example |
| 5 | 1250 | 920 | 70 | 640 | Comparative example |
| 6 | 1220 | 940 | 85 | 680 | Invention example |
| 7 | 1220 | 940 | 85 | 680 | Invention example |
| 8 | 1220 | 940 | 85 | 680 | Reference example |
| 9 | 1220 | 940 | 85 | 680 | Invention example |
| 10 | 1220 | 940 | 85 | 680 | Invention example |
| 11 | 1220 | 940 | 85 | 680 | Reference example |
| 12 | 1250 | 910 | 200 | 620 | Comparative example |
| 13 | 1250 | 910 | 200 | 620 | Reference example |
| 14 | 1250 | 910 | 200 | 620 | Reference example |
| 15 | 1260 | 910 | 200 | 620 | Comparative example |
| 16 | 1260 | 920 | 45 | 660 | Invention example |
| 17 | 1260 | 920 | 45 | 660 | Invention example |
| 18 | 1260 | 920 | 45 | 660 | Invention example |
| 19 | 1260 | 920 | 45 | 660 | Reference example |
| 20 | 1260 | 920 | 45 | 660 | Comparative example |

(continued)

| Steel No. | Hot rolling step | | | | Remarks |
|---|---|---|---|---|---|
| | Heating temperature (°C) | Finish rolling temperature (°C) | Average cooling rate (°C/s) *2 | Coiling temperature (°C) | |
| 21 | 1250 | 950 | 100 | 600 | Comparative example |
| 22 | 1230 | 890 | 40 | 550 | Comparative example |
| 23 | 1200 | 870 | 25 | 685 | Comparative example |
| 24 | 1230 | 910 | 50 | 610 | Invention example |
| 25 | 1230 | 1000 | 50 | 630 | Invention example |
| 26 | 1230 | 960 | 50 | 690 | Invention example |
| 27 | 1230 | 940 | 50 | 625 | Invention example |
| 28 | 1230 | 950 | 50 | 630 | Invention example |
| 29 | 1230 | 920 | 50 | 640 | Invention example |
| 30 | 1260 | 940 | 120 | 670 | Invention example |
| 31 | 1260 | 935 | 120 | 660 | Invention example |
| 32 | 1260 | 920 | 120 | 620 | Invention example |
| 33 | 1260 | 920 | 120 | 610 | Invention example |
| 34 | 1250 | 940 | 250 | 690 | Invention example |
| 35 | 1250 | 935 | 250 | 660 | Reference example |
| 36 | 1250 | 910 | 60 | 680 | Reference example |
| 37 | 1250 | 945 | 60 | 620 | Reference example |
| 38 | 1250 | 950 | 35 | 640 | Reference example |
| 39 | 1220 | 930 | 100 | 660 | Reference example |
| 40 | 1220 | 930 | 85 | 680 | Invention example |
| 41 | 1200 | 880 | 50 | 500 | Comparative example |

(continued)

| Steel No. | Hot rolling step | | | | Remarks |
| --- | --- | --- | --- | --- | --- |
| | Heating temperature (°C) | Finish rolling temperature (°C) | Average cooling rate (°C/s) *2 | Coiling temperature (°C) | |
| 42 | 1200 | <u>880</u> | 50 | <u>500</u> | Comparative example |
| 43 | 1250 | 910 | 70 | 620 | Invention example |
| <u>44</u> | 1250 | 850 | 70 | 620 | Comparative example |
| <u>45</u> | 1250 | 910 | <u>8</u> | 620 | Comparative example |
| <u>46</u> | 1180 | 910 | 70 | <u>540</u> | Comparative example |
| <u>47</u> | 1250 | 910 | 70 | <u>760</u> | Comparative example |
| *2) Average cooling rate (°C/s) in cooling from 900°C to 750°C | | | | | |

Test pieces were taken from the hot rolled steel sheets (hot rolled steel sheet, galvanized steel sheet, and galvannealed steel sheet) obtained as described above. A microstructure observation, a tensile test, and a hole expanding test were performed and, thereby, the area fraction of ferritic phase, the types an the area ratios of microstructures other than the ferritic phase, the average grain size of Ti carbides, the tensile strength, the elongation, and the hole expanding ratio (stretch flange formability) were determined. The test methods were as described below.

(i) Microstructure observation

Test piece was taken from the resulting hot rolled steel sheet, a cross-section (L cross-section) parallel to a rolling direction of the test piece was polished, and corrosion with nital was performed. Thereafter, microstructure photographs taken with an optical microscope (magnification: 400 times) and a scanning electron microscope (magnification: 5,000 times) were used, and the types of ferritic phases and microstructures other than the ferritic phase and the area fractions thereof were determined.

In addition, a thin film produced from the hot rolled steel sheet was observed with a transmission electron microscope and the average grain size of Ti carbides was determined. A photograph taken with the transmission electron microscope (magnification: 340,000 times) was used, the maximum diameter d (diameter of a largest portion of the upper and lower surfaces of the disc) of 100 Ti carbides in total of five fields of view and the thickness t of the disc-shaped precipitate in a direction orthogonal to the upper and lower surfaces of the disc were measured, and the average grain size of Ti carbides was determined as the above-described arithmetic average value (average grain size $d_{def}$).

(ii) Tensile test

A JIS No. 5 tensile test piece (JIS Z 2201) was taken from the resulting hot rolled steel sheet, where the tensile direction was the direction at a right angle to the rolling direction. A tensile test was performed in conformity with the specification of JIS Z 2241 and the tensile strength (TS) and the elongation (EL) were measured.

(iii) Hole expanding test

A test piece (size: 130 mm × 130 mm) was taken from the resulting hot rolled steel sheet. A hole having initial diameter $d_0$: 10 mmφ was formed in the test piece by punching (clearance: 12.5% of test piece sheet thickness). A hole expanding test was performed using the resulting test pieces. That is, a cone punch having an apex angle: 60° was pushed into the hole from the punch side in the punching to expand the hole, and a hole diameter $d_1$ when a crack penetrated the steel sheet (test piece) was measured. The hole expanding ratio λ (%) was calculated on the basis of the following formula.

$$\text{hole expanding ratio } \lambda \text{ (\%)} = \{(d_1 - d_0)/d_0\} \times 100$$

The results are shown in Table 3.

[Table 3]

[Table 3]

| Steel No. | Microstructure of hot rolled steel sheet | | Mechanical properties of hot rolled steel sheet | | | Remarks |
|---|---|---|---|---|---|---|
| | Area fraction of ferrite (%) | Average grain size of Ti carbides (nm) | Tensile strength TS (MPa) | Elongation EL(%) | Hole expanding ratio $\lambda$ (%) | |
| 1 | 100 | 5.0 | 712 | 23 | 110 | Comparative example |
| 2 | 100 | 3.6 | 825 | 22 | 120 | Invention example |
| 3 | 100 | 3.2 | 843 | 22 | 120 | Invention example |
| 4 | 100 | 3.3 | 823 | 22 | 115 | Invention example |
| 5 | 70(remainder pearlite) | 11.2 | 721 | 18 | 40 | Comparative example |
| 6 | 100 | 4.2 | 804 | 21 | 119 | Invention example |
| 7 | 100 | 4.3 | 802 | 21 | 121 | Invention example |
| 8 | 100 | 4.5 | 808 | 21 | 119 | Reference example |
| 9 | 100 | 3.9 | 785 | 23 | 120 | Invention example |
| 10 | 100 | 5.1 | 815 | 22 | 115 | Invention example |
| 11 | 100 | 4.3 | 792 | 23 | 105 | Reference example |
| 12 | 85(remainder pearlite) | 3.0 | 664 | 26 | 55 | Comparative example |
| 13 | 100 | 3.8 | 799 | 23 | 106 | Reference example |
| 14 | 100 | 3.9 | 850 | 22 | 100 | Reference example |
| 15 | 100 | 13.0 | 644 | 24 | 105 | Comparative example |
| 16 | 100 | 3.1 | 815 | 21 | 105 | Invention example |
| 17 | 100 | 3.2 | 819 | 21 | 100 | Invention example |

(continued)

| Steel No. | Microstructure of hot rolled steel sheet | | Mechanical properties of hot rolled steel sheet | | | Remarks |
|---|---|---|---|---|---|---|
| | Area fraction of ferrite (%) | Average grain size of Ti carbides (nm) | Tensile strength TS (MPa) | Elongation EL(%) | Hole expanding ratio λ (%) | |
| 18 | 100 | 3.3 | 825 | 21 | 102 | Invention example |
| 19 | 100 | 3.5 | 817 | 21 | 120 | Reference example |
| 20 | 87 (remainder pearlite) | 4.2 | 781 | 19 | 45 | Comparative example |
| 21 | 89(remainder bainitic ferrite) | 3.3 | 721 | 21 | 85 | Comparative example |
| 22 | 65 (remainder bainite) | 12.3 | 778 | 18 | 60 | Comparative example |
| 23 | 99 | 6.0 | 745 | 22 | 60 | Comparative example |
| 24 | 100 | 3.1 | 825 | 21 | 101 | Invention example |
| 25 | 100 | 3.2 | 830 | 21 | 100 | Invention example |
| 26 | 100 | 3.2 | 831 | 21 | 112 | Invention example |
| 27 | 100 | 3.3 | 832 | 21 | 108 | Invention example |
| 28 | 100 | 3.1 | 831 | 21 | 109 | Invention example |
| 29 | 100 | 3.1 | 829 | 21 | 102 | Invention example |
| 30 | 100 | 3.6 | 821 | 21 | 108 | Invention example |
| 31 | 100 | 3.7 | 818 | 21 | 109 | Invention example |
| 32 | 100 | 3.6 | 805 | 21 | 100 | Invention example |
| 33 | 100 | 3.7 | 808 | 21 | 101 | Invention example |
| 34 | 100 | 3.1 | 834 | 22 | 120 | Invention example |
| 35 | 100 | 3.2 | 842 | 21 | 123 | Reference example |
| 36 | 100 | 3.3 | 829 | 21 | 119 | Reference example |
| 37 | 100 | 3.2 | 785 | 21 | 115 | Reference example |

**EP 2 767 606 B1**

(continued)

| Steel No. | Microstructure of hot rolled steel sheet | | Mechanical properties of hot rolled steel sheet | | | Remarks |
|---|---|---|---|---|---|---|
| | Area fraction of ferrite (%) | Average grain size of Ti carbides (nm) | Tensile strength TS (MPa) | Elongation EL(%) | Hole expanding ratio λ (%) | |
| 38 | 100 | 3.5 | 793 | 21 | 101 | Reference example |
| 39 | 100 | 3.1 | 795 | 21 | 103 | Reference example |
| 40 | 100 | 3.3 | 800 | 21 | 105 | Invention example |
| 41 | 85(remainder bainitic ferrite) | 12.0 | 775 | 16 | 65 | Comparative example |
| 42 | 90(remainder bainitic ferrite) | 13.0 | 765 | 16 | 63 | Comparative example |
| 43 | 100 | 2.1 | 835 | 22 | 120 | Invention example |
| 44 | 100 | 2.0 | 842 | 20 | 75 | Comparative example |
| 45 | 100 | 16.2 | 758 | 20 | 88 | Comparative example |
| 46 | 88(remainder bainitic ferrite + martensite) | 11.2 | 770 | 17 | 75 | Comparative example |
| 47 | 96(remainder pearlite) | 12.6 | 756 | 20 | 85 | Comparative example |

All invention examples are hot rolled steel sheets having high strength of tensile strength TS: 780 MPa and excellent formability of elongation EL: 20% or more and hole expanding ratio λ: 100% or more in combination. On the other hand, comparative examples out of the scope of the present invention are unable to ensure predetermined high strength or are unable to ensure a sufficient hole expanding ratio.

**Claims**

1. A method for manufacturing a high strength hot rolled steel sheet comprising the steps of heating a semi-manufactured steel to an austenitic single phase region, performing hot rolling composed of rough rolling and finish rolling, and performing cooling and coiling after completion of the finish rolling to produce a hot rolled steel sheet, wherein the semi-manufactured steel has a composition containing C: more than 0.035% and 0.07% or less, Si: 0.3% or less, Mn: more than 0.35% and 0.5% or less, P: 0.03% or less, S: 0.03% or less, Al: 0.1% or less, N: 0.01% or less, Ti: 0.135% or more and 0.235% or less, optionally B: 0.0025% or less, optionally 1.0% or less of at least one of REM, Zr, Nb, V, As, Cu, Ni, Sn, Pb, Ta, W, Mo, Cr, Sb, Mg, Ca, Co, Se, Zn, and Cs in total, and the remainder composed of Fe and incidental impurities, on a percent by mass basis, in such a way that C, S, N, and Ti satisfy the formula (1) described below, the finishing temperature of the finish rolling is specified to be 900°C or higher, the average cooling rate in the cooling from 900°C to 750°C is specified to be 10°C/sec. or more, and the coiling temperature in the coiling is specified to be 580°C or higher and 750°C or lower:

$$((Ti - (48/14)N - (48/32)S)/48)/(C/12) < 1.0 \quad (1)$$

(C, S, N, and Ti: content of the respective elements (percent by mass)).

2. The method for manufacturing a high strength hot rolled steel sheet according to Claim 1, wherein the composition contains B: 0.0025% or less on a percent by mass basis.

3. The method for manufacturing a high strength hot rolled steel sheet according to Claim 1 or 2, wherein the composition contains 1.0% or less of at least one of REM, Zr, Nb, V, As, Cu, Ni, Sn, Pb, Ta, W, Mo, Cr, Sb, Mg, Ca, Co, Se, Zn, and Cs in total on a percent by mass basis.

4. The method for manufacturing a high strength hot rolled steel sheet according to any one of Claims 1 to 3, wherein the hot rolled steel sheet is subjected to a coating treatment.

5. The method for manufacturing a high strength hot rolled steel sheet according to Claim 4, wherein the hot rolled steel sheet is subjected to an alloying treatment following the coating treatment.

6. A high strength hot rolled steel sheet obtainable by the method according to claim 1, wherein the high strength hot rolled steel sheet comprises
a composition containing C: more than 0.035% and 0.07% or less, Si: 0.3% or less, Mn: more than 0.35% and 0.5% or less, P: 0.03% or less, S: 0.03% or less, Al: 0.1% or less, N: 0.01% or less, Ti: 0.135% or more and 0.235% or less, optionally B: 0.0025% or less, optionally 1.0% or less of at least one of REM, Zr, Nb, V, As, Cu, Ni, Sn, Pb, Ta, W, Mo, Cr, Sb, Mg, Ca, Co, Se, Zn, and Cs in total, and the remainder composed of Fe and incidental impurities, on a percent by mass basis, in such a way that C, S, N, and Ti satisfy the formula (1) described below,
a microstructure in which a matrix includes more than 95% of ferritic phase on an area fraction basis and fine Ti carbides having an average grain size of less than 10 nm are precipitated in the grains of the ferritic phase, and
a tensile strength TS of 780 MPa or more:

$$((Ti - (48/14)N - (48/32)S)/48)/(C/12) < 1.0 \quad (1)$$

(C, S, N, and Ti: content of the respective elements (percent by mass)).

7. The high strength hot rolled steel sheet according to Claim 6, wherein the composition contains B: 0.0025% or less on a percent by mass basis.

8. The high strength hot rolled steel sheet according to Claim 6 or 7, wherein the composition contains 1.0% or less of at least one of REM, Zr, Nb, V, As, Cu, Ni, Sn, Pb, Ta, W, Mo, Cr, Sb, Mg, Ca, Co, Se, Zn, and Cs in total on a percent by mass basis.

9. The high strength hot rolled steel sheet according to any one of Claims 6 to 8, wherein a coating layer is included on the steel sheet surface.


**Patentansprüche**

1. Verfahren zur Herstellung eines hochfesten warmgewalzten Stahlblechs, umfassend die Schritte Aufheizen eines Halbzeug-Stahls in eine Region der austenitischen Einzelphase, Durchführen von Warmwalzen, das sich aus Vorwalzen und Endwalzen zusammensetzt und Durchführen von Abkühlen und Aufwickeln nach dem Abschluss des Endwalzens, um ein warmgewalztes Stahlblech herzustellen,
wobei der Halbzeug-Stahl eine Zusammensetzung aufweist, die auf Massenprozent-Basis C: mehr als 0,035% und 0,07% oder weniger, Si: 0,3% oder weniger, Mn: mehr als 0,35% und 0,5% oder weniger, P: 0,03% oder weniger, S: 0,03% oder weniger, Al: 0,1% oder weniger, N: 0,01% oder weniger, Ti: 0,135% oder mehr und 0,235% oder weniger, optional B: 0,0025% oder weniger, optional insgesamt 1,0% oder weniger von zumindest einem aus REM, Zr, Nb, V, As, Cu, Ni, Sn, Pb, Ta, W, Mo, Cr, Sb, Mg, Ca, Co, Se, Zn und Cs enthält, wobei der Rest aus Fe und zufälligen Verunreinigungen zusammengesetzt ist, derart, dass C, S, N, und Ti der nachfolgend beschriebenen Gleichung (1) genügen,
die Endtemperatur des Endwalzens auf 900°C oder höher festgelegt wird, die durchschnittliche Abkühlrate beim Kühlen von 900°C bis 750°C auf 10°C/Sek. oder mehr festgelegt wird und die Haspeltemperatur beim Aufwickeln auf 580°C oder höher und 750°C oder niedriger festgelegt wird:

$$((Ti - (48/14)N - (48/32)S)/48)/(C/12) < 1,0 \qquad (1)$$

(C, S, N, und Ti: Konzentration der jeweiligen Elemente (Massenprozent)) .

2. Verfahren zur Herstellung eines hochfesten warmgewalzten Stahlblechs gemäß Anspruch 1, wobei die Zusammensetzung auf Massenprozent-Basis B: 0,0025% oder weniger enthält.

3. Verfahren zur Herstellung eines hochfesten warmgewalzten Stahlblechs gemäß Anspruch 1 oder 2, wobei die Zusammensetzung auf Massenprozent-Basis insgesamt 1,0% oder weniger von zumindest einem aus REM, Zr, Nb, V, As, Cu, Ni, Sn, Pb, Ta, W, Mo, Cr, Sb, Mg, Ca, Co, Se, Zn und Cs enthält.

4. Verfahren zur Herstellung eines hochfesten warmgewalzten Stahlblechs gemäß einem der Ansprüche 1 bis 3, wobei das warmgewalzte Stahlblech einer Beschichtungsbehandlung unterzogen wird.

5. Verfahren zur Herstellung eines hochfesten warmgewalzten Stahlblechs gemäß Anspruch 4, wobei das warmgewalzte Stahlblech einer der Beschichtungsbehandlung folgenden Legierungsbehandlung unterzogen wird.

6. Hochfestes warmgewalztes Stahlblech erhältlich durch das Verfahren gemäß Anspruch 1, wobei das hochfeste warmgewalzte Stahlblech
eine Zusammensetzung, die auf Massenprozent-Basis C: mehr als 0,035% und 0,07% oder weniger, Si: 0,3% oder weniger, Mn: mehr als 0,35% und 0,5% oder weniger, P: 0,03% oder weniger, S: 0,03% oder weniger, Al: 0,1% oder weniger, N: 0,01% oder weniger, Ti: 0,135% oder mehr und 0,235% oder weniger, optional B: 0,0025% oder weniger, optional insgesamt 1,0% oder weniger von zumindest einem aus REM, Zr, Nb, V, As, Cu, Ni, Sn, Pb, Ta, W, Mo, Cr, Sb, Mg, Ca, Co, Se, Zn und Cs beinhaltet, wobei der Rest aus Fe und zufälligen Verunreinigungen zusammengesetzt ist, derart, dass C, S, N, und Ti der nachfolgend beschriebenen Gleichung (1) genügen,
ein Gefüge, in dem eine Matrix auf einer Flächenanteil-Basis mehr als 95% ferritische Phase beinhaltet und feine Ti-Karbide, die eine durchschnittliche Korngröße von weniger als 10 nm aufweisen, in den Körnern der ferritischen Phase ausgeschieden sind, und
eine Zugfestigkeit TS von 780 MPa oder mehr umfasst:

$$((Ti - (48/14)N - (48/32)S)/48)/(C/12) < 1,0 \qquad (1)$$

(C, S, N, und Ti: Konzentration der jeweiligen Elemente (Massenprozent)).

7. Hochfestes warmgewalztes Stahlblech gemäß Anspruch 6, wobei die Zusammensetzung, auf einer Massenprozent-Basis, B: 0,0025% oder weniger enthält.

8. Hochfestes warmgewalztes Stahlblech gemäß Anspruch 6 oder 7, wobei die Zusammensetzung, auf einer Massenprozent-Basis, insgesamt 1,0% oder weniger von zumindest einem aus REM, Zr, Nb, V, As, Cu, Ni, Sn, Pb, Ta, W, Mo, Cr, Sb, Mg, Ca, Co, Se, Zn und Cs enthält.

9. Hochfestes warmgewalztes Stahlblech gemäß einem der Ansprüche 6 bis 8, wobei auf der Stahlblechoberfläche eine Beschichtungsschicht vorgesehen ist.


**Revendications**

1. Procédé de fabrication d'une feuille d'acier laminée à chaud à haute résistance comprenant les étapes consistant à chauffer un acier semi-ouvré en une région monophasique austénitique, à effectuer un laminage à chaud composé d'un laminage grossier et d'un laminage de finition, et à effectuer un refroidissement et un bobinage après achèvement du laminage de finition afin de produire une feuille d'acier laminée à chaud,
dans lequel l'acier semi-ouvré a une composition contenant C : plus de 0,035 % et 0,07 % ou moins, Si : 0,3 % ou moins, Mn : plus de 0,35 % et 0,5 % ou moins, P : 0,03 % ou moins, S : 0,03 % ou moins, Al : 0,1 % ou moins, N : 0,01 % ou moins, Ti : 0,135 % ou plus et 0,235 % ou moins, facultativement B : 0,0025 % ou moins, facultativement 1,0 % ou moins d'au moins un parmi les métaux des terres rares (REM), Zr, Nb, V, As, Cu, Ni, Sn, Pb, Ta, W, Mo, Cr, Sb, Mg, Ca, Co, Se, Zn, et Cs au total, et le reste étant composé de Fe et d'impuretés incidentes, sur une base de pourcentage en masse, de telle sorte que C, S, N, et Ti satisfassent la formule (1) décrite ci-après,
la température de finition du laminage de finition est spécifiée être de 900 °C ou plus, la vitesse moyenne de refroidissement dans le refroidissement de 900 °C à 750 °C est spécifiée être de 10 °C/sec ou plus, et la température de bobinage dans le bobinage est spécifiée être de 580 °C ou plus et 750 °C ou moins :

$$((Ti - (48/14)N - (48/32)S)/48)/(C/12) < 1,0 \ (1)$$

(C, S, N, et Ti : teneur des éléments respectifs (pourcentage en masse)).

2. Procédé de fabrication d'une feuille d'acier laminée à chaud à haute résistance selon la revendication 1, dans lequel la composition contient B : 0,0025 % ou moins sur une base de pourcentage en masse.

3. Procédé de fabrication d'une feuille d'acier laminée à chaud à haute résistance selon la revendication 1 ou 2, dans lequel la composition contient en outre 1,0 % ou moins d'au moins un élément parmi les REM, Zr, Nb, V, As, Cu, Ni, Sn, Pb, Ta, W, Mo, Cr, Sb, Mg, Ca, Co, Se, Zn, et Cs au total sur une base de pourcentage en masse.

4. Procédé de fabrication d'une feuille d'acier laminée à chaud à haute résistance selon l'une quelconque des revendications 1 à 3, dans lequel la feuille d'acier laminée à chaud est soumise à un traitement de revêtement.

5. Procédé de fabrication d'une feuille d'acier laminée à chaud à haute résistance selon la revendication 4, dans lequel la feuille d'acier laminée à chaud est soumise à un traitement de formation d'alliage à la suite du traitement de revêtement.

6. Feuille d'acier laminée à chaud à haute résistance apte à être obtenue par le procédé selon la revendication 1, la feuille d'acier laminée à chaud à haute résistance comprenant
une composition contenant C : plus de 0,035 % et 0,07 % ou moins, Si : 0,3 % ou moins, Mn : plus de 0,35 % et 0,5 % ou moins, P : 0,03 % ou moins, S : 0,03 % ou moins, Al : 0,1% ou moins, N : 0,01 % ou moins, Ti : 0,135 % ou plus et 0,235 % ou moins, facultativement B : 0,0025 % ou moins, facultativement 1,0 % ou moins d'au moins un parmi les REM, Zr, Nb, V, As, Cu, Ni, Sn, Pb, Ta, W, Mo, Cr, Sb, Mg, Ca, Co, Se, Zn, et Cs au total, et le reste étant composé de Fe et d'impuretés incidentes, sur une base de pourcentage en masse, de telle sorte que C, S, N, et Ti satisfassent la formule (1) décrite ci-après,
une microstructure dans laquelle une matrice inclut plus de 95 % de phase ferritique sur une base de fraction de surface et de fins carbures de Ti ayant une granulométrie moyenne inférieure à 10 nm sont précipités dans les grains de la phase ferritique, et
une résistance à la traction TS de 780 MPa ou plus :

$$((Ti - (48/14)N - (48/32)S)/48)/(C/12) < 1,0 \ (1)$$

(C, S, N, et Ti : teneur des éléments respectifs (pourcentage en masse)).

7. Feuille d'acier laminée à chaud à haute résistance selon la revendication 6, dans laquelle la composition contient B : 0,0025 % ou moins sur une base de pourcentage en masse.

8. Feuille d'acier laminée à chaud à haute résistance selon la revendication 6 ou 7, dans laquelle la composition contient 1,0 % ou moins d'au moins un parmi les REM, Zr, Nb, V, As, Cu, Ni, Sn, Pb, Ta, W, Mo, Cr, Sb, Mg, Ca, Co, Se, Zn, et Cs au total sur une base de pourcentage en masse.

9. Feuille d'acier laminée à chaud à haute résistance selon l'une quelconque des revendications 6 à 8, dans laquelle une couche de revêtement est incluse sur la surface de la feuille d'acier.

[Fig. 1]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6172924 A
- JP 2000328186 A
- JP 8073985 A
- JP 6200351 A
- JP 2002322539 A
- JP 2007302992 A
- JP 2005298924 A
- EP 2735623 A1
- JP 2004137607 A
- JP 2010053434 A